# FASCICULE DE BREVET EUROPEEN

(11) **EP 3 204 219 B1**
(45) Date de publication et mention de la délivrance du brevet: **07.06.2023**
(21) Numéro de dépôt: 15777980.2
(22) Date de dépôt: 15.09.2015
(51) Int. Cl.: B29C 70/38, B29C 70/68, B29C 70/16, B29C 35/08

(54) **PROCÉDÉ DE RÉALISATION DE PIÈCES THERMOPLASTIQUES RENFORCÉES DE FIBRES THERMOPLASTIQUES CONTINUES**
VERFAHREN ZUR HERSTELLUNG VON THERMOPLASTISCHEN KUNSTSTOFFTEILEN, DIE MIT KONTINUIERLICHEN THERMOPLASTISCHEN FASERN VERSTÄRKT SIND
METHOD FOR PRODUCING THERMOPLASTIC PARTS REINFORCED WITH CONTINUOUS THERMOPLASTIC FIBRES

(30) Priorité: 07.10.2014 FR 1402255
(43) Date de publication de la demande: 16.08.2017
(73) Titulaire: Coriolis Group, 56530 Quéven (FR)
(72) Inventeur: HAMLYN, Alexander, 56270 Ploemeur (FR); CARTIÉ, Denis, 29380 Bannalec (FR)
(86) Numéro de dépôt international: PCT/FR2015/000184
(87) Numéro de publication internationale: WO 2016/055700

(56) Documents cités:
- EP-A2- 1 792 708
- EP-B1- 1 792 708
- WO-A1-2011/006956
- WO-A2-2013/072583
- FR-A1- 2 998 838

## Description

La présente invention concerne un procédé de réalisation d'une pièce renforcée, plus particulièrement un procédé de réalisation de pièces composites thermoplastiques renforcées de fibres continues.

Il est connu de fabriquer des pièces composites en réalisant dans un premier temps une préforme par projection dans un moule d'une résine et de fibres courtes, classiquement des fibres de verre. Cette préforme peut ensuite être soumise à une opération d'infusion ou d'injection de résine pour obtenir une pièce finale en matériau composite, comprenant des fibres et une matrice de résine. Cette technique de projection de fibres assure de bonnes cadences pour la production de préformes. Un inconvénient de cette technique est la faible tenue mécanique de la pièce finale en raison des fibres courtes et non orientées par rapport à des contraintes principales, les fibres courtes étant projetées de manière aléatoire. Cette technique ne peut être utilisée pour la fabrication de pièces de structure.

Il est également connu des procédés dits de placement de fibres dans lesquels des fibres continues sont déposées au contact sur un outillage pour former plusieurs plis dans des orientations définies. Ce procédé d'application au contact est mis en oeuvre au moyen d'une tête d'application de fibres comportant un rouleau de compactage destiné à venir en contact contre l'outillage pour appliquer une bande formée d'une ou plusieurs fibres plates continues. Le rouleau de compactage presse la bande de fibres contre l'outillage afin de faciliter l'adhésion des bandes déposées entre elles, ainsi que pour évacuer progressivement l'air emprisonné entre les bandes déposées.

Les fibres appliquées peuvent être des fibres plates continues, de type mèches, notamment des fibres de carbone, constituées d'une multitude de fils ou filaments de carbone. Les fibres peuvent être des fibres dite sèches, munies d'un liant, ou des fibres pré-imprégnées d'un polymère ou résine thermodurcissable ou thermoplastique. La tête est équipée d'un système de chauffage pour chauffer la bande de fibres, et/ou l'outillage ou des bandes déjà appliquées en amont du rouleau de compactage, juste avant le compactage de la bande, afin d'au moins ramollir la résine ou le liant, et ainsi favoriser l'adhésion des bandes entre elles.

Dans le cas de fibres sèches, la préforme obtenue à l'issue du drapage comprend classiquement moins de 5% en poids de liant, et est soumise à une opération d'imprégnation de résine, par injection ou infusion, pour former la pièce composite.

Dans le cas de fibres pré-imprégnées de résine thermodurcissable, la préforme résultante est soumise à une opération de durcissement ou cuisson par passage dans un four autoclave.

Dans le cas de fibres pré-imprégnées de résine thermoplastique, la préforme résultante est généralement soumise à une opération de consolidation par passage dans un four autoclave, cette consolidation visant à supprimer les vides et à réduire le taux de porosité et le taux de cristallinité de la pièce.

Dans le cas de fibres sèches ou de fibres thermoplastiques, le drapage du premier pli sur le moule est souvent problématique et doit être effectué à faible vitesse avec un film d'accroche. Par ailleurs, lorsque la préforme est constituée d'une multitude de plis, il est souvent nécessaire d'effectuer des compactages intermédiaires sous bâche à vide pour éviter des problèmes de foisonnement.

Ces procédés par placement de fibres permettent de réaliser des pièces de structure de bonne tenue mécanique. Toutefois les cadences de production apparaissent peu compatibles avec celle requises dans certains domaines, en particulier dans le domaine automobile.

Afin d'augmenter les cadences, il a été proposé d'appliquer au contact les fibres sur un outillage de drapage sensiblement plan, puis de transférer l'ensemble des plis entre les outillages mâle et femelle d'une presse pour obtenir la pièce avec sa forme finale souhaitée. Suivant la forme de la préforme finale, les fibres ont tendance à se plisser, et cette technique ne permet pas la réalisation de préformes de formes complexes.

Il a également été proposé des pièces composites consistant à venir surmouler une résine thermoplastique sur un renfort préfabriqué, à base de fibres continues et d'une matrice de résine. Le renfort est obtenu par placement de fibres automatisé ou par drapage manuel de tissus ou de bandes, et est positionné dans un moule dans lequel une résine thermoplastique est injectée. Comme précédemment, un tel procédé présente une productivité non satisfaisante dans certain domaine technique. Par ailleurs, les caractéristiques mécaniques des pièces obtenues sont limitées, dans la mesure où il est difficile de chauffer le renfort à sa température de fusion de résine et donc d'obtenir une bonne cohésion entre le renfort et la résine injectée.

Le document FR2998838 A1 décrit un procédé comprenant l'application de bandes sur un support en un premier matériau plastique, les bandes étant chauffées par un moyen de chauffage, chaque bande comprenant des fibres noyées dans un deuxième matériau plastique.

Le but de la présente invention est de proposer une solution visant à pallier les inconvénients précités.

A cet effet, la présente invention propose un procédé de réalisation d'une pièce renforcée, selon la revendication 1, qui comprend le drapage de fibres continues unidirectionnelles sur une pièce intermédiaire rigide obtenue à partir d'au moins un premier polymère thermoplastique, lesdites fibres étant pré-imprégnées d'au moins un deuxième polymère thermoplastique, ledit drapage étant réalisé par placement automatisé des fibres pré-imprégnées sur la pièce intermédiaire, au moyen d'un rouleau de compactage et par chauffage, par un système de chauffage, des fibres continues pré-imprégnées à draper et de la pièce intermédiaire, juste en amont du rouleau, à une température au moins supérieure ou égale à la température de fusion du deuxième polymère et à la température de fusion- du premier polymère, afin de souder les fibres pré-imprégnées à la pièce intermédiaire, lesdites fibres pré-imprégnées étant drapées dans la ou les directions des contraintes principales de la pièce renforcée.

Selon l'invention, la pièce renforcée est obtenue en drapant directement par placement de fibres quelques fibres continues sur une pièce rigide thermoplastique. Le procédé selon l'invention permet d'assurer une liaison satisfaisante entre les fibres continues et le polymère de la pièce intermédiaire. De manière surprenante, le soudage des fibres pré-imprégnées directement sur une pièce thermoplastique rigide s'avère plus facile à mettre en oeuvre que le soudage d'un premier pli de fibres sur un outillage, en utilisant un film d'accroche. Le drapage peut être réalisé à des vitesses de drapage importantes.

Les fibres continues unidirectionnelles appliquées par placement de fibres sont par exemple des fibres de carbone, des fibres de verre ou des fibres synthétiques. Lesdites fibres continues unidirectionnelles se présentent de préférence sous la forme de fibres plates ou mèches, par exemple d'un huitième de pouce (1 pouce = 2,54 cm), un quart de pouce ou un demi-pouce (1/8", 1/4" ou 1/2") de large. Selon un mode de réalisation les fibres continues pré-imprégnées d'un polymère thermoplastique présentent avant drapage une porosité inférieure ou égale à 3%, de préférence inférieure ou égale à 2%, mieux encore inférieure ou égale à 1%.

La pièce intermédiaire rigide est par exemple une pièce injectée ou moulée, obtenue par injection ou moulage d'au moins un premier polymère thermoplastique. La pièce intermédiaire rigide peut également être obtenue par un procédé de fabrication additive, par exemple à partir d'au moins un jonc de polymère thermoplastique.

Le premier polymère thermoplastique et le second polymère thermoplastique sont par exemple choisis dans le groupe constitué par les polyamides, polyesters tel que le polyéthylène téréphtalate, polyéthersulfones, polyétheréthercétones, polysulfures de phénylène, polyuréthanes, époxydes, polyoléfines, acide polylactique, ou un mélange d'un ou plusieurs de ces polymères.

Le premier polymère et le second polymère peuvent être identiques ou différents, des polymères de la même famille de thermoplastique ou de familles différentes.

Le premier polymère pour l'obtention de la pièce intermédiaire peut comprendre avantageusement une ou plusieurs charges, par exemple des fibres courtes non orientées, telles que des fibres de verre, des fibres de carbone ou des fibres synthétiques.

Selon l'invention, ledit chauffage est effectué à une température supérieure ou égale à la température de fusion du premier polymère afin de garantir un soudage efficace entre la pièce intermédiaire et les fibres continues.

De préférence, ledit chauffage est effectué à une température supérieure ou égale aux températures de processabilité du premier polymère et du deuxième polymère, auxquelles lesdits polymères sont classiquement mis en oeuvre pour des procédés de moulage ou d'injection.

Selon un mode de réalisation, ledit drapage comprend le placement automatisé de fibres continues pré-imprégnées sur des fibres continues préalablement drapées, au moyen d'un rouleau de compactage et par chauffage des fibres pré-imprégnées à draper et des fibres préalablement drapées à une température supérieure à la température de fusion du deuxième polymère, ledit drapage étant effectué en recouvrement dans une même direction que les fibres préalablement drapées, et/ ou dans des directions complémentaires.

Selon un mode de réalisation, ledit chauffage lors du drapage est effectué pour assurer une consolidation *in situ* du renfort, formé des fibres continues et du deuxième polymère, sur la pièce intermédiaire, de sorte que la pièce renforcée obtenue après drapage ne nécessite pas d'opération de traitement thermique supplémentaire pour atteindre les caractéristiques mécaniques souhaitées, le renfort formé des fibres continues et de sa matrice de deuxième polymère présentant après drapage une porosité inférieure ou égale à 3%, de préférence inférieure ou égale à 2%, mieux encore inférieure ou égale à 1%.

Selon un mode de réalisation, le procédé comprend un chauffage continu lors du drapage de fibres continues pour souder continûment sur toute leur longueur les fibres pré-imprégnées à la pièce intermédiaire.

Selon un mode de réalisation, le procédé comprend un chauffage discontinu lors du drapage de fibres continues pour souder les fibres à la pièce intermédiaire sur des portions de fibres espacées les unes des autres, le procédé pouvant comprendre le drapage de fibres avec un chauffage discontinu et le drapage de fibres avec un chauffage discontinu.

Selon un mode de réalisation, le chauffage est réalisé par un moyen de chauffage de type laser.

Selon un mode de réalisation, le procédé comprend le drapage de fibres en recouvrement, dans des directions complémentaires, au niveau d'une ou plusieurs zones d'assemblage de la pièce renforcée, afin de reprendre les efforts transmis par des moyens d'assemblage.

Selon un mode de réalisation, le procédé comprend le drapage de fibres pré-imprégnées autour de la ou des zones d'assemblage de la pièce renforcée, afin de reprendre les efforts transmis par les moyens d'assemblage. Pour chaque zone d'assemblage, la fibre est drapée autour d'au moins un axe d'assemblage, en particulier sur une surface de la pièce intermédiaire sensiblement parallèle à l'axe d'assemblage, et s'étend dans une direction opposée audit axe, par exemple sensiblement perpendiculaire audit axe.

Selon un mode de réalisation, la pièce intermédiaire est pourvue d'un ou plusieurs méplats au niveau desquels les fibres sont drapées. Selon l'invention, au moment de la conception de la pièce intermédiaire, on prévoit des zones spécifiques planes, telles que des méplats, afin de faciliter le drapage de fibres par placement de fibres et ainsi permettre un drapage rapide des fibres tout en garantissant un compactage efficace des fibres sur toute leur largueur. Avantageusement, les fibres drapées sur la pièce intermédiaire suivent des trajectoires géodésiques.

L'invention sera mieux comprise, et d'autres buts, détails, caractéristiques et avantages apparaîtront plus clairement au cours de la description explicative détaillée qui va suivre de modes de réalisation particuliers actuellement préférés de l'invention, en référence aux dessins schématiques annexés, sur lesquels :
- la figure 1 est une vue schématique en perspective d'une pièce injectée intermédiaire pour la réalisation d'une première pièce renforcée selon invention ;
- la figure 2 est une vue schématique partielle de côté de la pièce injectée de la figure 1 lors d'une opération de placement au moyen d'une tête de placement de fibres ;
- la figure 3 est une vue schématique de la pièce intermédiaire après placement de premières fibres ;
- la figure 4 est une vue analogue à celle de la figure 3 illustrant la pièce renforcée après placement de secondes fibres ;
- la figure 5 est une vue analogue à celle de la figure 4 illustrant une variante de réalisation pour les opérations de placement de fibres ;
- les figures 6A et 6B sont respectivement une vue de dessus et une vue partielle agrandie de côté d'une deuxième pièce renforcée selon l'invention ; et,
- les figures 7A et 7B sont respectivement une vue de dessus et une vue partielle agrandie de côté d'une troisième pièce renforcée selon l'invention.

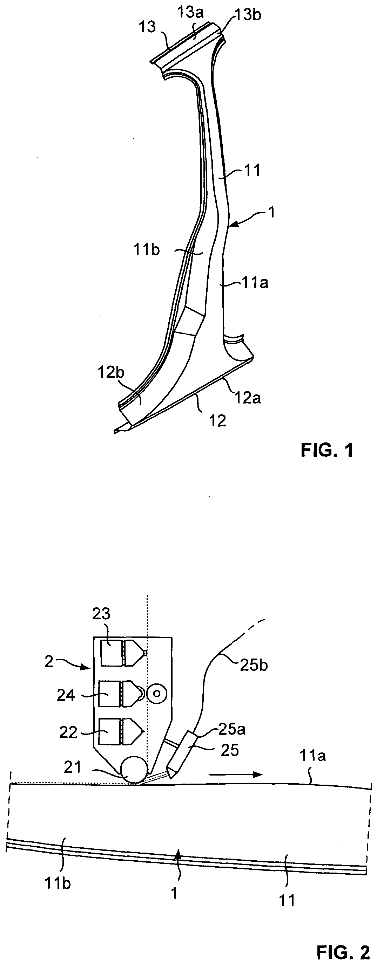

La figure 1 illustre une pièce intermédiaire 1 pour la réalisation d'un montant la caisse d'un véhicule automobile, disposé de chaque côté du véhicule entre la porte arrière et la porte avant, classiquement appelé montant ou pied milieu, et prévu pour résister notamment aux chocs latéraux et aux efforts de compression.

Le montant 1 comprend une partie centrale 11 verticale reliée en extrémité à une partie inférieure 12 et à une partie supérieure 13 pour l'assemblage du montant respectivement au bas de caisse, et au pavillon. La partie centrale présente une section variable en forme générale de U avec une base ou paroi centrale 11a et deux branches ou parois latérales 11b, la section s'agrandit en extrémité avec des parois latérales courbées pour la jonction de la partie centrale aux parties inférieure 12, et supérieure 13. La partie supérieure 13 présente une section en U et est reliée par une de ses parois latérales 13b à la paroi centrale 11a de la partie centrale. La partie inférieure 12 présente une section en U, avec deux parois latérales 12b courbées disposées dans le prolongement des parois latérales 11b de la partie centrale, et une paroi centrale 12a horizontale disposée dans le prolongement de la paroi centrale 11a de la partie centrale.

Selon l'invention, cette pièce intermédiaire 1 est réalisée à partir d'un premier polymère thermoplastique, par exemple par injection. Cette pièce intermédiaire est ensuite renforcée par drapage de fibres continues pré-imprégnées d'un deuxième polymère thermoplastique, ce drapage étant effectué au moyen d'une tête de placement de fibres afin de rigidifier la pièce intermédiaire par rapport aux efforts auxquels elle doit pouvoir résister.

La figure 2 illustre de manière schématique une tête 2 de placement de fibres, connue en soi, permettant le drapage automatique au contact de fibre. La tête comprend un rouleau de compactage 21 pour appliquer la fibre au contact sur la pièce intermédiaire. La tête comprend en outre des moyens de coupe 22 pour couper la fibre en fin de trajectoire, des moyens de blocage 23 disposés en amont des moyens de coupe par rapport à la direction d'avancement de la fibre pour bloquer la fibre venant d'être coupée, et des moyens de réacheminement 24 disposés amont des moyens de coupe, pour entraîner la fibre, ceci afin de pouvoir à tout moment stopper et reprendre l'application de la fibre.

La tête est en outre équipée d'un système de chauffage 25 pour chauffer lors du drapage la fibre à draper et la pièce intermédiaire, juste en amont du rouleau par rapport à la direction de la tête, et ainsi souder la fibre à la pièce intermédiaire. Le système de chauffage est ici de type laser et comprend une optique 25a montée sur la tête. Le faisceau émis par une source (non représentée) déportée par rapport à la tête est acheminée via une fibre optique 25b jusqu'à l'optique 25a pour former un faisceau laser en direction de la ligne de contact entre le rouleau et la pièce intermédiaire. Le drapage est réalisé par déplacement relatif de la tête par rapport à la pièce intermédiaire. Pour ce faire, la tête et/ou la pièce intermédiaire sont assemblées à un système de déplacement.

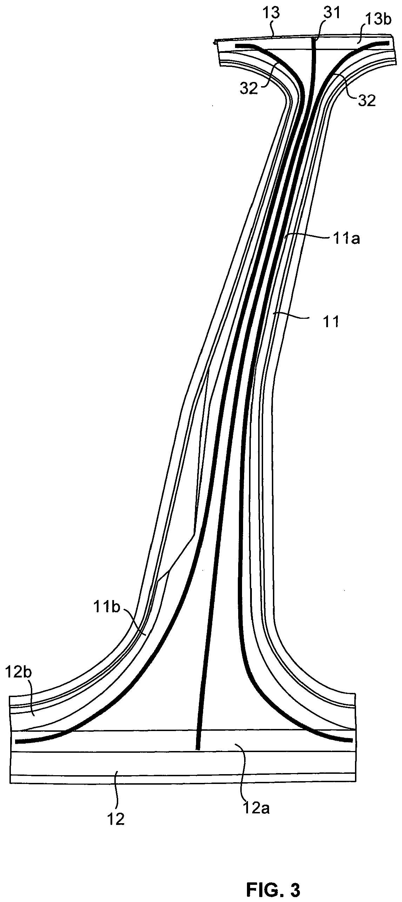

En référence à la figure 3, des premières fibres 31, 32 pré-imprégnées sont drapées longitudinalement sur la paroi centrale 11a de la partie centrale, du côté extérieur de cette dernière. Ces premières fibres se prolongent sur la paroi latérale 13b de la partie supérieure, et sur la paroi centrale 12a de la partie inférieure. Ces premières fibres sont ici au nombre de trois, avec une fibre centrale 31, et deux fibres latérales 32 qui en extrémité suivent la courbure des parois latérales 11b, 12b. Les premières fibres 31, 32 sont drapées une par une, en partant par exemple de la partie supérieure.

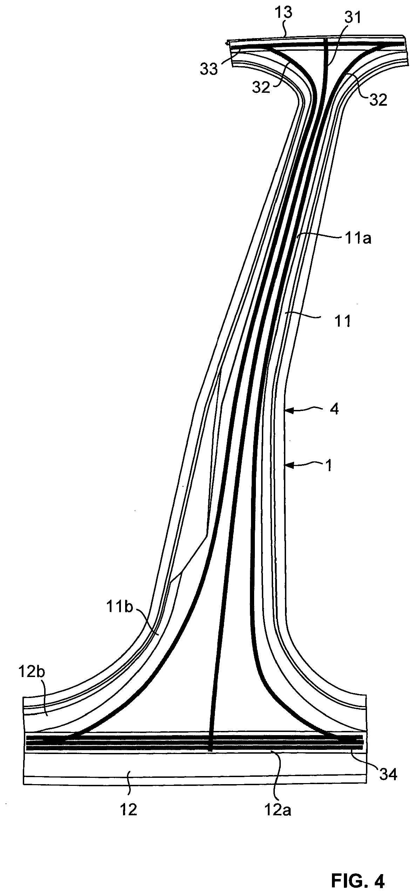

En référence à la figure 4, la pièce renforcée 4 selon l'invention est obtenue après drapage de secondes fibres 33, 34. Ces secondes fibres sont drapées sur les parties inférieure et supérieure en recouvrement des premières fibres 31, 32. Une seconde fibre 33 est drapée sur la paroi latérale 13b de la partie supérieure. Des secondes fibres 34, au nombre de trois, sont drapées sur la paroi centrale 12a de la partie inférieure en recouvrement des premières fibres.

Lors du drapage, le chauffage est défini pour souder continûment les fibres 31-34 à la pièce intermédiaire, et de manière assurer une consolidation *in situ* des fibres et obtenir une pièce renforcée ne nécessitant pas d'étape de traitement thermique supplémentaire.

A titre d'exemple, les fibres appliquées sont des fibres de carbone de type mèche de 6,35 mm (1/4 de pouce) de large, pré-imprégnées d'un polyamide. La pièce intermédiaire est obtenue par injection d'un polyamide chargé de fibres courtes de carbone. La fibre continue préimprégnée et la pièce intermédiaire sont chauffées à une température supérieure, par exemple de 10 à 30°C, aux températures de fusion des deux polyamides utilisés.

En variante, l'opération de drapage est réalisée au moyen d'une tête de placement de fibres permettant de draper une bande formée d'une ou plusieurs fibres disposées parallèlement entre elles, par exemple sensiblement bord à bord. Ainsi, les trois deuxièmes fibres sur la partie inférieure peuvent être drapées en une seule passe.

Le nombre de fibres drapées est donné ici à titre d'exemple, plusieurs premières fibres peuvent être drapées côte à côte ou en superposition. Des fibres peuvent en outre être drapées pour former des renforts locaux au niveau de zones de fixation prévues pour la fixation du montant milieu au bas de caisse et au pavillon.

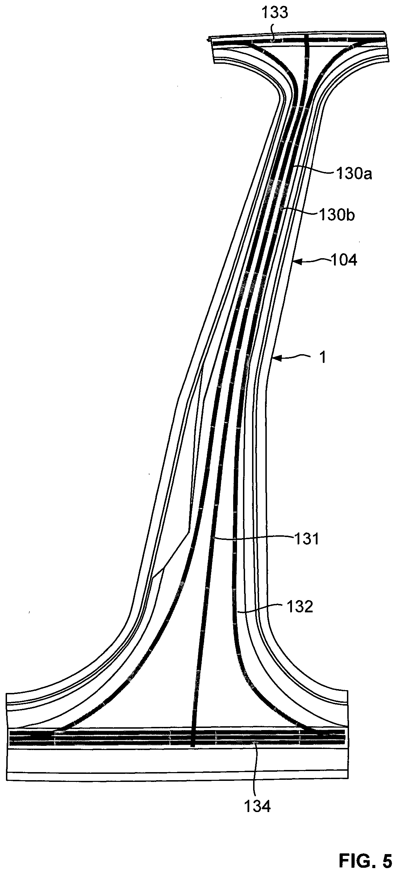

La figure 5 illustre une variante de réalisation dans laquelle chaque fibre de la pièce renforcée 104 est soudée de manière discontinue lors de son drapage. Chaque fibre drapée 131, 132, 133, 134 comprend une alternance de portions soudées 130a et de portions non soudées 130b obtenues par activation ou non du chauffage lors du drapage, avec une portion soudée en début et en fin de trajectoire, les premières fibres et les secondes fibres se chevauchant au niveau de portions soudées. Un tel soudage partiel des fibres permet de réduire le temps de drapage et peut être réalisé lorsqu'il ne réduit pas les propriétés mécaniques de la pièce renforcée.

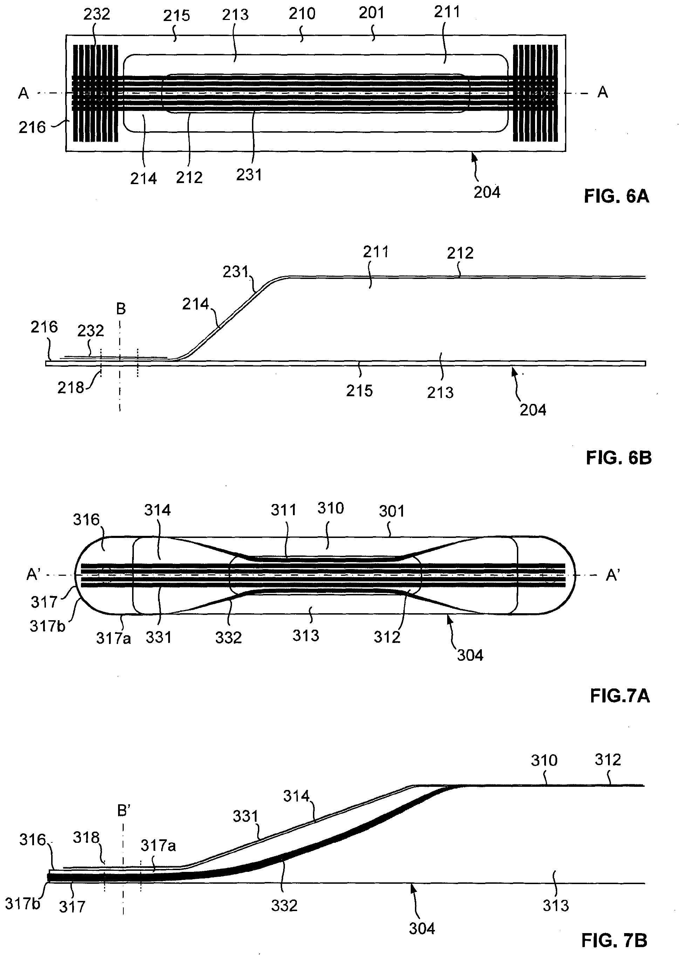

Les figures 6A et 6B représentent une deuxième pièce renforcée 204 selon l'invention réalisée à partir d'une pièce intermédiaire 201, obtenue par exemple par injection d'un premier polymère thermoplastique, sur laquelle ont été drapées, par placement de fibres, des fibres continues pré-imprégnées d'un second polymère thermoplastique.

La pièce renforcée 204 constitue ici une poutre de renfort destinée par exemple à être assemblée sur une pièce de structure). La pièce intermédiaire 201 se présente sous la forme d'une plaque 210 d'axe longitudinal A, munie sur sa face extérieure d'un bossage longitudinal 211, ledit bossage formant un renfoncement sur la face intérieure opposée. Le bossage présente une paroi supérieure 212 plane reliée par des parois inclinées longitudinales 213 et des parois inclinées transversales 214 respectivement aux parois latérales 215 planes et aux parois d'extrémité 216 planes. Ce type de poutre est destiné être assemblée par chacune de ses parois d'extrémité 216 au niveau d'une zone d'assemblage représentée schématiquement sous la référence 218 sur la figure 6B. L'assemblage est classiquement effectué par perçage d'un ou plusieurs trous de la pièce renforcée et mise en place d'un insert, par exemple un insert thermoplastique selon un axe d'assemblage B.

Des premières fibres 231 sont drapés longitudinalement parallèlement à l'axe A par placement de fibres, d'une paroi d'extrémité 216 à l'autre de la pièce intermédiaire. Des secondes fibres 233 continues sont ensuite drapées au niveau des parois d'extrémités 216 dans une orientation complémentaire de celle des premières fibres, afin de reprendre les efforts transmis par les premières fibres et les efforts transmis par l'insert d'assemblage. Dans l'exemple illustré, les secondes fibres 232 sont drapées à 90° des premières fibres 231. En variante, un premier pli de secondes fibres est drapé à 45° des premières fibres, puis un deuxième pli de secondes fibres est drapé par-dessus le premier pli à -45°.

A titre d'exemple, la pièce intermédiaire est réalisée par moulage ou injection d'un polyamide chargé de fibres de verre courtes, orientées de manière aléatoire, les fibres continues sont des fibres de verre imprégnées d'un polyamide. Le drapage au contact est effectué en chauffant au niveau de la ligne de contact du rouleau et de la pièce intermédiaire à une température légèrement supérieure à la température de fusion des deux polyamides.

Les figures 7A et 7B illustrent une troisième pièce renforcée 304 selon l'invention formée à partir d'une pièce intermédiaire 301 qui se différencie de la précédente principalement par le fait qu'elle ne comprend pas de parties latérales planes, la pièce comprenant un bossage 311 se prolongeant par deux parois d'extrémité 316, ces parois d'extrémité présentant un rebord 317 avec deux portions rectilignes 317a reliées entre elles par une portion courbée 317b. Ce rebord présente une surface extérieure sensiblement plane, sensiblement perpendiculaire à la paroi supérieure, sensiblement parallèle à l'axe d'assemblage B.

Comme précédemment, des premières fibres 312 continues sont drapées longitudinalement parallèlement à l'axe A' par placement de fibres d'une paroi d'extrémité 316 à l'autre de la pièce intermédiaire, en passant par les parois inclinées transversales 314. Une seconde fibre 332 est drapée sur les rebords 317 des deux parois d'extrémité 316 en passant sur les parois inclinées longitudinales 313 et sur la paroi supérieure 312 plane du bossage 311, de part et d'autre des premières fibres 331. Le drapage de cette fibre commence par exemple sur la paroi supérieure 312, d'un premier côté des premières fibres 331, et se termine en venant recouvrir le début de fibre. En variante, cette deuxième fibre fait au moins deux fois le tour de la pièce intermédiaire, le deuxième tour se superposant sensiblement au premier tour. Cette deuxième fibre permet de reprendre les efforts transmis par des inserts d'assemblage d'axe B' qui seront disposés au niveau des zones d'assemblage 318 des parois d'extrémité, sensiblement parallèlement aux rebords. Des troisièmes fibres peuvent en outre être drapées sur les parois d'extrémités au niveau de ces zones d'assemblage, par exemple à 90° des premières fibres.

## Revendications

1. Procédé de réalisation d'une pièce renforcée (4, 104, 204, 304), qui comprend le drapage de fibres continues unidirectionnelles (31-34 ; 131-134 ; 231, 232 ; 331, 332) sur une pièce intermédiaire rigide (1, 201, 301) obtenue à partir d'au moins un premier polymère thermoplastique, lesdites fibres étant pré-imprégnées d'au moins un deuxième polymère thermoplastique, ledit drapage étant réalisé par placement automatisé des fibres pré-imprégnées sur la pièce intermédiaire, au moyen d'un rouleau de compactage (21) et par chauffage, par un système de chauffage, des fibres continues pré-imprégnées à draper et de la pièce intermédiaire juste en amont du rouleau, à une température au moins supérieure ou égale à la température de fusion du deuxième polymère et à la température de fusion du premier polymère, afin de souder les fibres pré-imprégnées à la pièce intermédiaire, lesdites fibres pré-imprégnées étant drapées dans la ou les directions des contraintes principales de la pièce renforcée.

2. Procédé selon la revendication 1, dans lequel ledit chauffage est effectué à une température supérieure aux températures de fusion du premier polymère et du deuxième polymère.

3. Procédé selon la revendication 1 ou 2, dans lequel ledit drapage comprend le placement automatisé de fibres continues sur des fibres continues préalablement drapées.

4. Procédé selon l'une des revendications 1 à 3, dans lequel ledit chauffage lors du drapage est effectué pour assurer une consolidation *in situ* du renfort, formé des fibres continues et du deuxième polymère, sur la pièce intermédiaire, ledit renfort présentant après drapage une porosité inférieure ou égale à 3%.

5. Procédé selon l'une des revendications 1 à 4, qui comprend un chauffage continu lors du drapage de fibres pour souder continûment sur toute leur longueur les fibres continues à la pièce intermédiaire.

6. Procédé selon l'une des revendications 1 à 5, qui comprend un chauffage discontinu lors du drapage des fibres continues pour souder les fibres continues à la pièce intermédiaire sur des portions (130a) espacées les unes des autres.

7. Procédé selon l'une des revendications 1 à 6, dans lequel le chauffage est réalisé par un moyen de chauffage (25) de type laser.

8. Procédé selon l'une des revendications 1 à 7, qui comprend le drapage de fibres en recouvrement, dans des directions complémentaires, au niveau d'une ou plusieurs zones d'assemblage (208, 308) de la pièce renforcée.

9. Procédé selon l'une des revendications 1 à 8, qui comprend le drapage de fibres pré-imprégnées (332) autour d'une ou plusieurs zones d'assemblage (308) de la pièce renforcée.

10. Procédé selon l'une des revendications 1 à 9, dans lequel la pièce intermédiaire (301) est pourvue d'un ou plusieurs méplats (317) au niveau desquels les fibres sont drapées.

11. Procédé selon l'une des revendications 1 à 10, dans lequel la pièce intermédiaire rigide (1, 201, 301) est une pièce injectée ou moulée obtenue par injection ou moulage d'au moins un premier polymère thermoplastique.

12. Procédé selon l'une des revendications 1 à 10, dans lequel la pièce intermédiaire (1, 201, 301) rigide est obtenue par fabrication additive.

13. Procédé selon l'une des revendications 1 à 12, dans lequel la pièce intermédiaire (1, 201, 301) est obtenue à partir d'au moins un premier polymère thermoplastique additionné d'une ou plusieurs charges comprenant des fibres courtes.

## Patentansprüche

1. Verfahren zur Herstellung eines verstärkten Teils (4, 104, 204, 304), welches das Drapieren von kontinuierlichen unidirektionalen Fasern (31-34; 131-134; 231, 232; 331, 332) auf einem starren Zwischenteil (1, 201, 301) umfasst, welches aus mindestens einem ersten thermoplastischen Polymer erhalten wird, wobei die Fasern mit mindestens einem zweiten thermoplastischen Polymer vorimprägniert sind, wobei das Drapieren durch automatisiertes Platzieren der vorimprägnierten Fasern auf dem Zwischenteil anhand einer Verdichtungswalze (21) und durch Erwärmen durch ein Heizsystem der zu drapierenden vorimprägnierten Fasern und des Zwischenteils unmittelbar stromaufwärts der Walze bei einer Temperatur mindestens größer oder gleich der Schmelztemperatur des zweiten Polymers und bei einer Schmelztemperatur des ersten Polymers realisiert wird, um die vorimprägnierten Fasern mit dem Zwischenteil zu verschweißen, wobei die vorimprägnierten Fasern in der oder den Hauptbeanspruchungsrichtungen des verstärkten Teils drapiert werden.

2. Verfahren nach Anspruch 1, wobei das Erwärmen bei einer Temperatur höher als die Schmelztemperaturen des ersten Polymers und des zweiten Polymers durchgeführt wird.

3. Verfahren nach Anspruch 1 oder 2, wobei das Drapieren das automatisierte Platzieren kontinuierlicher Fasern auf den zuvor drapierten kontinuierlichen Fasern umfasst.

4. Verfahren nach einem der Ansprüche 1 bis 3, wobei das Erwärmen beim Drapieren durchgeführt wird, um für eine *in situ* Konsolidierung der Verstärkung, die aus den kontinuierlichen Fasern und dem zweiten Polymer gebildet wird, auf dem Zwischenteil zu sorgen, wobei die Verstärkung nach dem Drapieren eine Porosität kleiner oder gleich 3 % aufweist.

5. Verfahren nach einem der Ansprüche 1 bis 4, welches eine kontinuierliche Erwärmung beim Drapieren von Fasern zum kontinuierlichen Verschweißen der kontinuierlichen Fasern mit dem Zwischenteil auf ihrer gesamten Länge umfasst.

6. Verfahren nach einem der Ansprüche 1 bis 5, welches eine diskontinuierliche Erwärmung beim Drapieren der kontinuierlichen Fasern zum Verschweißen der kontinuierlichen Fasern am Zwischenteil auf beabstandeten Abschnitten (130a) voneinander umfasst.

7. Verfahren nach einem der Ansprüche 1 bis 6, wobei die Erwärmung durch ein Erwärmungsmittel (25) in der Art eines Lasers durchgeführt wird.

8. Verfahren nach einem der Ansprüche 1 bis 7, welches das Drapieren von Abdeckfasern in ergänzenden Richtungen im Bereich einer oder mehrerer Verbindungsbereiche (208, 308) des verstärkten Teils umfasst.

9. Verfahren nach einem der Ansprüche 1 bis 8, welches das Drapieren von vorimprägnierten Fasern (332) um einen oder mehrere Verbindungsbereiche (308) des verstärkten Teils herum umfasst.

10. Verfahren nach einem der Ansprüche 1 bis 9, wobei das Zwischenstück (301) mit einer oder mehreren Abflachungen (317) versehen ist, im Bereich derer die Fasern drapiert sind.

11. Verfahren nach einem der Ansprüche 1 bis 10, wobei das starre Zwischenteil (1, 201, 301) ein Spritzguss- oder Formteil ist, das durch Spritzgießen oder Formen mindestens eines ersten thermoplastischen Polymers erhalten wird.

12. Verfahren nach einem der Ansprüche 1 à 10, wobei das starre Zwischenteil (1, 201, 301) durch additive Fertigung erhalten wird.

13. Verfahren nach einem der Ansprüche 1 à 12, wobei das Zwischenteil (1, 201, 301) aus mindestens einem ersten thermoplastischen Polymer durch Hinzufügen einer oder mehrerer Füllungen erhalten wird, die kurze Fasern umfassen.

## Claims

1. Method for producing a reinforced part (4, 104, 204, 304), which comprises the lay-up of continuous unidirectional fibres (31-34; 131-134; 231, 232 ; 331, 332) on a rigid intermediate part (1, 201, 301) obtained from at least a first thermoplastic polymer, said fibres being pre-impregnated with at least a second thermoplastic polymer, said lay-up being carried out by automated placement of the pre-impregnated fibres on the intermediate part, by means of a compaction roller (21) and by heating, by a heating system, of the continuous pre-impregnated fibres to be laid up and the intermediate part just upstream of the roller, at a temperature at least equal to or greater than the melting temperature of the second polymer and the melting temperature of the first polymer, in order to weld the pre-impregnated fibres to the intermediate part, said pre-impregnated fibres being laid up in the direction(s) of the principal stresses of the reinforced part.

2. Method according to claim 1, wherein said heating is performed at a temperature above the melting temperatures of the first polymer and the second polymer.

3. Method according to claim 1 or 2, wherein said lay-up comprises automated placement of continuous fibres onto previously laid up continuous fibres.

4. Method according to any one of claims 1 to 3, wherein said heating during lay-up is performed to ensure in situ consolidation of the reinforcement, formed of the continuous fibres and the second polymer, on the intermediate part, said reinforcement having after lay-up a porosity less than or equal to 3%.

5. Method according to one of claims 1 to 4, which comprises continuous heating during the lay-up of the fibres in order to continuously weld the continuous fibres to the intermediate part along their entire length.

6. Method according to any of claims 1 to 5, which comprises discontinuous heating during lay-up of the continuous fibres to weld the continuous fibres to the intermediate part on spaced apart portions (130a).

7. Method according to any of claims 1 to 6, wherein the heating is performed by a laser type heating means (25).

8. Method according to any one of claims 1 to 7, which comprises the lay-up of overlapping fibres, in complementary directions, at one or more joining areas (208, 308) of the reinforced part.

9. Method according to any of claims 1 to 8, which comprises the lay-up of pre-impregnated fibres (332) around one or more joining areas (308) of the reinforced part.

10. Method according to any of claims 1 to 9, wherein the intermediate part (301) is provided with one or more flats (317) at which the fibres are laid up.

11. Method according to any one of claims 1 to 10, wherein the rigid intermediate part (1, 201, 301) is an injected or molded part obtained by injecting or molding at least a first thermoplastic polymer.

12. Method according to any of claims 1 to 10, wherein the rigid intermediate part (1, 201, 301) is obtained by additive manufacturing.

13. Method according to any of claims 1 to 12, wherein the intermediate part (1, 201, 301) is obtained from at least a first thermoplastic polymer with the addition of one or more fillers comprising short fibres.
